# EUROPEAN PATENT APPLICATION

(11) **EP 2 476 625 A1**
(43) Date of publication of application: **18.07.2012**
(21) Application number: 12275002.9
(22) Date of filing: 11.01.2012
(51) Int. Cl.: B65D 5/42, B65D 25/00

(54) **Stabiliser for a packaged article**

(30) Priority: 18.01.2011 GB 201100811
(71) Applicant: ITEM PRODUCTS (NPD) LTD., Luton, Bedfordshire LU1 3HG (GB)
(72) Inventor: Taylor, Gerald, Luton, Bedfordshire LU1 3HG (GB)
(74) Representative: McKinnon, Alistair James

(57) **Abstract**

The invention provides a stabiliser for a wheeled packaged article, the stabiliser being configured for direct attachment to the packaging of a packaged article by a clamp connector that engages an inner surface of the packaging, wherein the stabiliser comprises: anti-rolling means; a base plate, to which the anti-rolling means is coupled, and which base plate comprises means to enable the stabiliser to be attached to the packaging of a packaged article by a clamp connector; wherein the base plate comprises an aperture, so that when the device is attached to the packaging of a packaged article by a clamp connector, the clamp connector engages the surface of the base plate that is not in contact with the packaging.

The invention also provides a wheelable package for an article comprising at least one stabiliser according to one or more embodiments of the present invention; at least one wheeling device; and wherein the at least one stabiliser is directly attached to the package.

The invention also provides a method of improving the stability of a wheeled packaged article, comprising: directly attaching to the packagaging of the article one or more stabilisers according to one or more embodiments of the present invention.

## Description

The present invention is directed to a stabiliser that may be directly attached to the packaging of packaged articles, particularly to packaged articles having attached to the packaging thereof at least one wheeling device. The present invention is also directed to packaged articles incorporating such stabilisers, and to methods for improving the handlability and stability of packaged articles by attaching stabilisers and wheeling devices directly to the packaging of the articles. In particular, the present invention is directed to stabilisers that may be easily attached to packaged articles, and which may be conveniently recycled or disposed of after use.

The use of packaging materials to protect goods during transport is widespread, and the types of goods that may be transported in packaging range from small lightweight articles (for example multiple packs of confectionary that may be transported in a single box for convenience) to industrial products (including electronics, automotive products and heavy duty mechanical machinery). In addition, relatively large and bulky articles may also be transported in packaging, for example mattresses for beds, which may be shrink wrapped and then rolled and enclosed in packaging for transport. Furthermore, small articles contained in individual packaging boxes may be enclosed in larger containers, again for ease of transport or to aid distribution within supermarkets and large retail stores (so called "shelf-ready") packaging). Packaging may also be used in the form of "wardrobe cases" for transporting clothing etc. during household removals. However, although the use of packaging materials generally aids in the transport of items, when the packages are heavy and/or awkward in shape they may still be difficult to transport by hand, and in many countries health and safety legislation will require that packages above a certain weight and/or above a certain size may only be lifted by two or more people working together, which can significantly increase the cost of moving and handling such packages.

One means for overcoming the above disadvantages of handling large and/or heavy packaged articles has been to transport such articles using wheeled devices, such as trolleys, wheeled pallets or simple wheeled platforms. However, this is only possible if a suitable wheeled device is available whenever required. In addition, it is still necessary for the packaged articles to be lifted in order to be placed on to the wheeled devices, and there may also be difficulties in retaining the packaged articles on the wheeled devices during transport (for example if the packages are unstable).

A further approach has been to attach castors to packaged articles, however this is normally done by inserting a sheet of additional material (normally wood) into the package and attaching the castors to the inserted material through the packaging. This procedure is however, labour intensive, particularly if it is necessary to open the package to insert the material to which the castors will be attached and to then reclose it, and also has a number of environmental drawbacks. In particular, although most packaging materials are recyclable, a package containing an additional sheet of attachment material plus castors attached thereto, will be difficult to recycle because of the different materials present. This will require any user wishing to recycle the package to firstly remove the castors (which themselves will be difficult to recycle) and also the sheet of attachment material (which in many cases may be permanently attached to the packaging), and to dispose of each component separately. Thus, in practice, many such wheeled containers are simply disposed of to landfill, rather than dismantled and recycled. This not only has an unwelcome environmental impact, but may also have cost implications, either for end user, or for the local authority responsible for disposing of the packaging.

UK patent application no. GB0906624.2 discloses a wheeling device for a packaged article. The wheeling device may be directly attached to the packaging of the article.

A wheelable package having a wheeling device such as, for example, that disclosed in GB 0906624.2 attached thereto may comprise an angled surface to which one or more wheeling devices are attached, so that, when the wheelable package is not being wheeled, a lower surface of the package is in contact with the ground and the wheeling device or devices either also touch the ground or are not in contact with the ground, but also so that, when the wheelable package is tilted, the weight of the package is taken by the wheeling device or devices, and the lower surface no longer contacts the ground, so that the wheelable package may be wheeled.

A drawback with such an arrangement is that the package must be manufactured to include the angled surface. In such an arrangement, the package has seven surfaces (i.e. a "box" shape with one edge truncated to form a seventh, angled, face). It will be appreciated that manufacturing a package of this nature is more difficult than manufacturing a conventional (i.e. six-sided) package.

In view of the above, it may be desirable to attach wheeling devices to the bottom surface of a package having a conventional shape, i.e. the six-sided package mentioned above. The package may have attached to a bottom face thereof at least three wheeling devices to improve the handlability of the package. The provision of the wheeling devices to the package allows a handler to more easily move the package.

Whilst this arrangement has advantages, if such a package having wheeling devices attached thereto is located on an uneven surface, it is possible that, if disturbed, the package could move from a stationary position. Also, if a surface on which the package is located has a great enough incline, the package may move due to gravity.

Aspects and embodiments of the present invention were devised with the foregoing in mind.

Viewed from a first aspect, there is provided a stabiliser for a wheeled packaged article, the stabiliser being configured for direct attachment to the packaging of a packaged article by a clamp connector that engages an inner surface of the packaging, wherein the stabiliser comprises: anti-rolling means; a base plate, to which the anti-rolling means is coupled, and which base plate comprises means to enable the stabiliser to be attached to the packaging of a packaged article by a clamp connector; wherein the base plate comprises an aperture, so that when the device is attached to the packaging of a packaged article by a clamp connector, the clamp connector engages the surface of the base plate that is not in contact with the packaging.

Because a stabiliser according one or more embodiments of the present invention may be directly attached to the packaging of an article, it is convenient to attach whenever required. In addition, it may also be simple to remove from the packaging, and will therefore allow the packaging to be recycled, and for the stabiliser itself to be disposed of for recycling or to be reused.

Stabilisers according to the present invention may comprise anti-rolling means in the form of an elongate element (i.e. the length thereof is greater than the largest distance across its cross-section) constrained to prevent rotation thereof. The elongate element may comprise at least one substantially flat surface. Optionally, the elongate element comprises a prism. The prism may comprise at least three longitudinal faces. Optionally, one of the longitudinal faces may comprise a ground-contacting surface of the anti-rolling means.

The base plate may incorporate two or more flaps hingedly connected thereto, so that in a first position the flaps may be inserted through a hole in the packaging, and also so that the flaps may be rotated and locked in a second position in which they engage the inner surface of the packaging and thereby clamp the base plate to the packaging.

A suitable clamp connector may comprise a first surface suitable to engage the inner surface of the packaging of a packaged article, and two or more hinged flaps which may be arranged in a first position in which they may be inserted through an aperture in the packaging and the corresponding aperture in the base plate of a stabiliser according to the present invention, and which may then be rotated and locked into a second position in which they are in contact with the surface of the base plate which is not in contact with the packaging, to thereby lock the base plate into contact with the packaging. This use of the clamp connector will require access to the inside of the packaging; however, as will be appreciated, such a clamp connector may also be used by inserting the hinged flaps through the aperture in the base plate, and then through the aperture in the packaging, while in the first position, before locking the flaps into the second position, so that they are locked into contact with the inner surface of the packaging, and so that the clamp itself is locked in contact with the surface of the base plate which is not in contact with the packaging. Optionally, clamp connectors for use in the present invention may comprise means to conveniently release the hinged flaps from the locked position, so that the clamp connector and the stabiliser according to the present invention may be easily removed from the packaged article.

The device may further comprise a clamp connector. Optionally, the clamp connector may be an integral part of the base plate.

In stabilisers according to one or more embodiments of the present invention comprising a base plate, the base plate may comprise two arms located on the face of the base plate which does not contact the packaging when the stabiliser is attached to a packaged article, the arms being positioned on opposing edges of the base plate and extending perpendicular therefrom, and comprising means to connect the anti-rolling means thereto. Optionally, the means to connect the anti-rolling means to the arms may comprise an aperture in each arm, so that a connecting shaft of the anti-rolling means may be received in each arm.

Stabilisers according to one or more embodiments of the present invention may be composed of any suitable materials. Optionally, the stabilisers are substantially composed of recyclable materials. Further optionally, stabilisers according to one or more embodiments of the present invention are substantially composed of a single material. Suitable materials include plastics, polypropylenes and nylons. A particularly suitable material is Nylon® (for example, Nylon 6®).

Stabilisers according to one or more embodiments of the present invention may be of any size, depending upon the size and weight of the packages with which they are to be used.

Stabilisers according to the present invention may be attached to wheeled packages for articles either by the manufacturer of the packages (i.e. at any stage during the manufacture of the packages) or by the user of the wheeled packages, either before or after articles have been added to the packages.

Stabilisers according to the present invention may be manufactured by any conventional means such as, for example, injection moulding.

Viewed from a second aspect, there is provided a wheelable package for an article comprising: at least one stabiliser according to one or more embodiments of the present invention; at least one wheeling device; and wherein the stabiliser may be directly attached to the package.

Wheelable packages according to one or more embodiments of the present invention may comprise any number of stabilisers according to one or more embodiments of the present invention and one or more wheeling devices. For example, a single stabiliser may be sufficient to improve the stability of such a wheelable package to prevent the wheelable package from moving on an uneven and/or sloped surface. Particularly large articles may require numerous stabilisers and wheeling devices. Optionally, wheelable packages according to one or more embodiments of the present invention may comprise one, two, three or four stabilisers according to one or more embodiments of the present invention, and at least one wheeling device.

Wheelable packages according to one or more embodiments of the present invention may comprise any suitable rigid or semi-rigid packaging materials. Optionally, the packaging materials may comprise corrugated board or corrugated plastic (for example Correx® and derivatives). The packaging may be of any thickness, for example 3mm, 5mm or 25mm.

Wheelable packages according to one or more embodiments of the present invention may have weights of between 5kg and 100kg. Optionally, the weights may be between 10kg and 50kg.

Wheelable packages according to one or more embodiments of the present invention may comprise closed containers (i.e. boxes), but may also include open containers or materials that partially enclose an article.

Wheelable packages according to the present invention may comprise combinations of different types of wheeling devices. An example of a suitable wheeling device is disclosed in GB 0906624.2.

Wheelable packages according to one or more embodiments of the present invention will generally comprise stabilisers according to one or more embodiments of the present invention, and one or more wheeling devices, attached to a lower surface of the package, so that the packages rest on a combination of the stabilisers and the wheeling devices when the package is in a stationary position whilst in storage or in a stationary position whilst in transit.

The present invention also provides a method of improving the stability of a wheeled packaged article, the method comprising directly attaching to the packaging of the article one or more stabilisers according to one or more embodiments of the present invention.

One or more embodiments of the present invention are described further hereinafter, by way of example only, with reference to the accompanying drawings in which:
Fig. 1 illustrates a chassis component of a stabiliser according to one or more embodiments of the present invention;
Fig. 2 illustrates an anti-rolling means for a stabiliser according to one or more embodiments of the present invention;
Fig. 3 illustrates a perspective view of an assembled stabiliser according to one or more embodiments of the present invention;
Fig. 4 illustrates a clamp connector for use with one or more embodiments of the present invention as illustrated in Figs. 1 to 3;
Fig. 5 illustrates a side view of the clamp connector illustrated in Fig. 4 inserted into the chassis to form an assembled stabiliser according to one or more embodiments of the present invention;
Fig. 6 illustrates a perspective view of the clamp connector illustrated in Fig. 4 inserted into the chassis to form an assembled stabiliser according to one or more embodiments of the present invention;
Fig. 7 illustrates a portion of packaging of a packaged article comprising stabilisers according to one or more embodiments of the present invention, and wheeling devices; and
Fig. 8 illustrates a side view of an alternative assembled stabiliser according to one or more embodiments of the present invention.

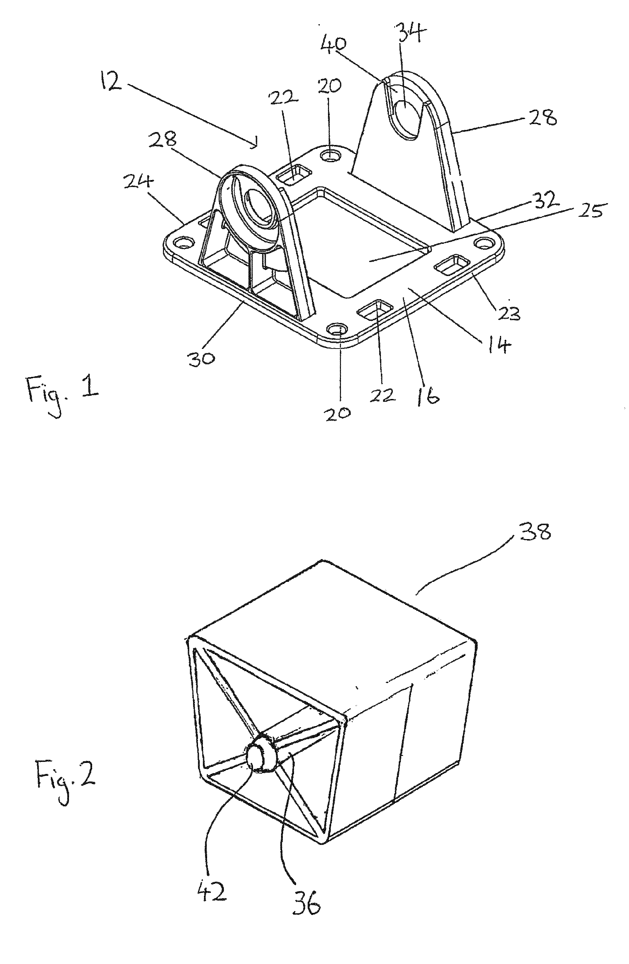

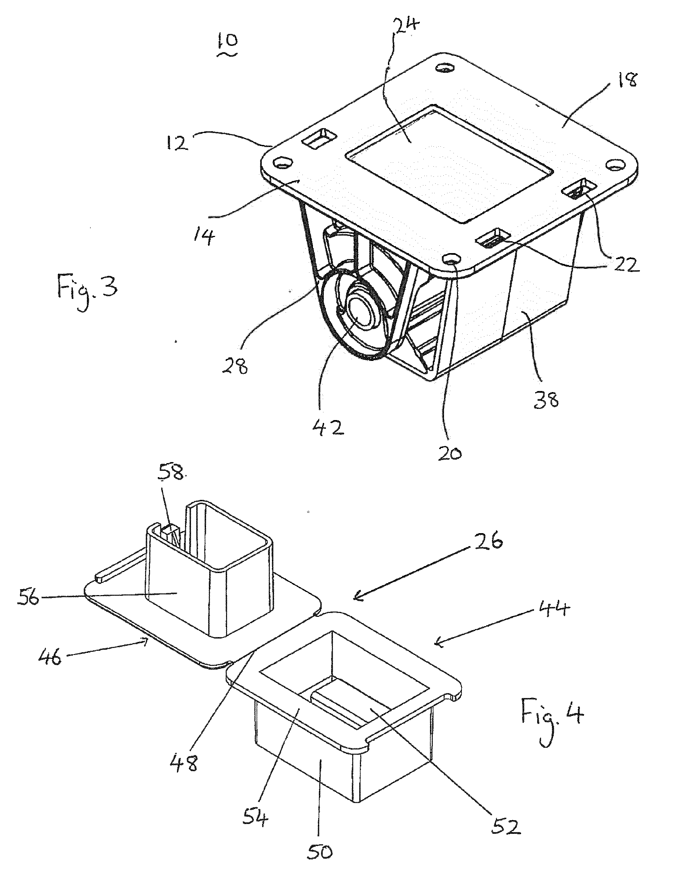

Fig. 1 illustrates a chassis 12 forming part of a stabiliser 10 according to one or more embodiments of the present invention. The chassis 12 comprises a base plate 14, having a first surface 16, and a second surface 18 (shown in Fig. 3). The base plate 14 includes various means to permit the stabiliser 10 to be connected to the packaging of a packaged article. These means include four circular holes 20, one positioned at each corner of the base plate 14. The circular holes 20 are suitable to permit the base plate 14 to be attached to the packaging of a packaged article by means of screws, bolts or rivets. The attachment means also include four rectangular holes 22, two of the rectangular holes being positioned along the first side 23 of the base plate 14, and the other two rectangular holes 22 being positioned along the opposing second side 24 of the base plate 14. The rectangular holes 22 are suitable to permit the base plate 14 to be attached to the packaging of a packaged article by means of staples, cable ties or strapping. Further means for permitting the stabiliser 10 according to the one or more embodiments of the present invention to be attached to the packaging of a packaged article include a rectangular aperture 25 positioned in the centre of the base plate 14, and which permits the base plate 14 to be attached to the packaging of the packaged article by means of clamp connector 26 (see Figs. 4, 5 and 6). As will be appreciated from Figs. 1 and 3, the base plate 14 of the stabiliser 10 according to one or more embodiments of the present invention may also be connected to the packaging of a packaged article by sandwiching the base plate 14 between two layers of the packaging material, or by adhering the second surface 18 of the base plate 14 to the packaging of a packaged article by use of an adhesive material. The stabiliser 10 according to one or more embodiments of the present invention may also be connected to the packaging of a packaged article by the use of strapping passing across the first surface 16 of the base plate 14 and around the packaged article.

The chassis 12 illustrated in Fig. 1 is also provided with two arms 28, one arm 28 being located at the third side 30 of the base plate 14, and the other arm 28 being located at the opposing fourth side 32 of the base plate 14. The arms 28 are substantially perpendicular to the base plate 14, and are each provided with a circular hole 34 suitable to receive a connecting shaft 36 of an anti-rolling means 38 (see Figs. 2 and 3). Each of the arms 28 are provided with a recess 40 (discussed below).

The length of the first and second sides 23, 24 of the base plate 14 is 78mm, and the length of the third and fourth sides 30, 32 is 80mm. The base plate has a thickness of 3mm.

Fig. 2 illustrates an anti-rolling means 38 for use in combination with the chassis 12 illustrated in Fig. 1. The anti-rolling means 38 comprises an elongate element having a quadrilateral-shaped cross-section. In the illustrated example, the anti-rolling means 38 comprises a trapezoidal prism. However, any elongate element having at least one substantially flat longitudinal surface may be used.

The anti-rolling means 38 includes a connecting shaft 36 which forms part of the means by which the anti-rolling means 38 can engage with the chassis. The anti-rolling means 38 has a length of 70mm.

The connecting shaft 36 comprises two ends 42, each end 42 extending from end surfaces of the anti-rolling means 38. Each end 42 of the connecting shaft 36 is sized to engage the circular hole 34 in one of the arms 28 of the chassis 12, so that (as illustrated in Fig. 3) the anti-rolling means 38 may be attached to the chassis 12 of the stabiliser 10 with each end 42 of the connecting shaft 36 being supported by an arm 28. Insertion of the ends 42 of the connecting shaft 36 into the circular holes 34 is facilitated by the recesses 40 in each of the arms 28. The length of the connecting shaft 36, including the ends 42, is 76mm, which is greater than the distance between the circular holes 34 of the arms 28, and therefore the ends 42 of the connecting shaft 36 will project through the arms 28, so that the anti-rolling means 38 is retained in the chassis 12. When the anti-rolling means 38 is engaged with the chassis 12 in this manner, the at least one flat surface of the anti-rolling means abuts the first surface 16 of the base plate 14. Such an arrangement prevents rotation of the anti-rolling means 38 relative to the chassis 12. Optionally, retaining clips or washers (not shown) may be inserted over the ends 42 of the connecting shaft 36 once the anti-rolling means 38 is positioned in the chassis 12 to help retain the anti-rolling means 38 in this position.

Fig. 3 illustrates a stabiliser 10 comprising an anti-rolling means 38 as illustrated in Fig. 2 attached to a chassis 12 as illustrated in Fig. 1. As discussed with respect to Figs. 1 and 2, the ends 42 of the connecting shaft 36 of the anti-rolling means 38 are located in, and project through, the circular holes 34 in the arms 28 of the chassis 12, so that the anti-rolling means 38 is retained in the chassis 12. As discussed with respect to Fig. 1, the stabiliser 10 may be attached to the packaging of a package by numerous means, including any of: adhering the second surface 18 of the base plate 14 of the chassis 12 to the packaging, sandwiching the base plate 14 between two layers of packaging, screwing, bolting or riveting the base plate to the packaging by use of the circular hole 20 in each corner of the base plate 14, attaching the base plate 14 to the packaging by the use of staples, cable ties or strapping through the central rectangular holes 22 located on the first and second sides 23, 24 of the base plate 14, or by use of a clamp connector 26 inserted through the central rectangular aperture 25 of the base plate 14.

The chassis 12 and anti-rolling means 38 of the stabiliser 10 are all made from Nylon 6®, although other plastic materials (preferably easily recyclable materials) could be used. The chassis 12 and anti-rolling means 38 are optionally formed by injection moulding.

Fig. 4 illustrates a clamp connector 26 for use in attaching a stabiliser 10 as illustrated in Fig. 3 to the packaging of a packaged article. The clamp connector 26 comprises a first component 44 and a second component 46 linked by a hinge 48. The first component 44 comprises a collar 50 inside which are located two hinged flaps 52. The hinged flaps 52 are positioned within the collar 50 so that, in a first position, they are retained completely within the circumference of the collar 50, but they may also be rotated into a second position, in which they project outwards from the collar 50. The first component 44 also comprises a rim 54 surrounding the collar 50.

The second component 46 of the clamp connector 26 comprises an internal collar 56 sized to fit within the collar 50 of the first component 44 so that, when the internal collar 56 is inserted into the collar 50 of the first component 44, the hinged flaps 52 are moved from the first position within the collar 50 to the second position extending beyond the collar 50. In addition, the internal collar 56 of the second component 46 comprises locking means 58 enabling the internal collar 56 to be locked within the collar 50, and to thereby lock the hinged flaps 52 in the second position. The locking means 58 also comprises release means (not shown) so that, when required, the second component 46 may be released and rotated around the hinge 48, removing the internal collar 56 from inside the collar 50 of the first component 44, and allowing the hinged flaps 52 to be moved from the second position into the first position.

The clamp connector 26 illustrated in Fig. 4 is made from polypropylene, but could be made from any other (optionally recyclable) plastic material, for example Nylon 6®. The clamp connector 26 is optionally produced by injection moulding. Clamp connectors as illustrated in Fig. 4 are commercially available, for example from Item Products (NPD) Limited, UK.

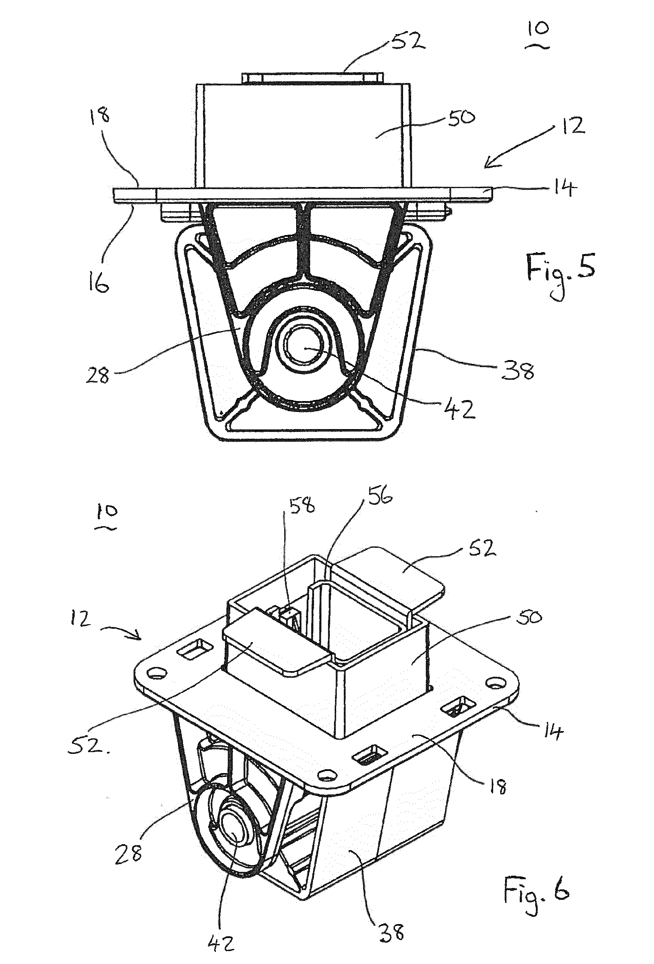

As illustrated in Figs. 5 and 6, the clamp connector 26 illustrated in Fig. 4 may be used to connect a stabiliser 10 to the packaging of a packaged article. For such use, the size of the collar 50 of the clamp connector 26 is selected to match the size of the rectangular aperture 25 in the base plate 14 of the chassis 12 of the stabiliser 10, and the height of the collar 50 of the clamp connector 26 is selected to correspond to the thickness of the packaging to which the stabiliser 10 is to be attached. In addition, the packaging of the packaged article will be provided with one or more pre-cut holes corresponding in size to the dimensions of the collar 50 of the clamp connector 26.

In order to attach the stabiliser 10 to a package by use of the clamp connector 26, the anti-rolling means 38 is removed from the chassis 12 of the stabiliser 10 and the clamp connector 26 is opened as illustrated in Fig. 4. The collar 50 of the first component 44 of the clamp connector 26 is inserted through the rectangular aperture 25 of the base plate 14 from the direction of the first surface 16, until the rim 54 of the first component 44 of the clamp connector contacts the first surface 16 of the base plate 14. The collar 50 is then inserted into the hole provided in the packaging material of the packaged article until the second surface 18 of the base plate 14 contacts the outer surface of the packaging material. At this stage the hinged flaps 52 are retained within the collar 50 of the clamp connector 26, so that they do not interfere with the passage of the collar 50 through the packaging. The second component 46 of the clamp connector 26 is then rotated around the hinge 48 so that the internal collar 56 of the second component 46 is inserted into the collar 50 of the first component 40, and so that the hinged flaps 52 are rotated out of the collar 50 and into engagement with the internal surface of the packaging. The locking means 58 locks the second component 46 in this position, so that the internal collar 56 is retained within the collar 50 of the first component, and so that the hinged flaps 52 are retained in contact with the internal surface of the packaging, locking the chassis in contact with the packaging of the packaged article.

The anti-rolling means 38 is then inserted into the arms 28 of the chassis, so that the ends 42 of the connecting shaft 36 engage, and are retained by, the circular holes 34 in the arms 28. The stabiliser 10 (in conjunction with wheeling devices attached to the package) may then support the weight of the package and improve the stability thereof. If required, a number of stabilisers 10 may be attached to the same surface of the packaged article.

In order to remove the stabiliser 10 from the package, the anti-rolling means 38 is removed from the arms 28 of the chassis 12, and the locking means 58 of the clamp connector 26 is released, so that the internal collar 56 of the second component 46 may be rotated out of the collar 50 of the first component, releasing the hinged flaps 52. The clamp connector 26, or the chassis 12, is then pulled away from the packaging, which will cause the hinged flaps 52 to move from the second position into the first position within the collar 50 of the first component 44 of the clamp connector 26, allowing the chassis 12 and the clamp connector 26 to be removed from the packaging. The clamp connector 26 may then be removed from the chassis 12 and the anti-rolling means 38 may be reinserted into the chassis 12 so that the stabiliser 10 may be re-used, or the anti-rolling means 38 and/or the chassis 12 may be disposed of for recycling. Similarly, the package may either be reused or may be disposed of. If the package is disposed of it will be simple to recycle because the stabiliser will have been removed before disposal.

Stabilisers 10 as illustrated in Figs. 1 to 3, 5 and 6 may be connected to packages by packaging manufacturers, or may be provided separately for attachment to packages by end users. They may also be provided in conjunction with clamp connectors of the type illustrated in Fig. 4.

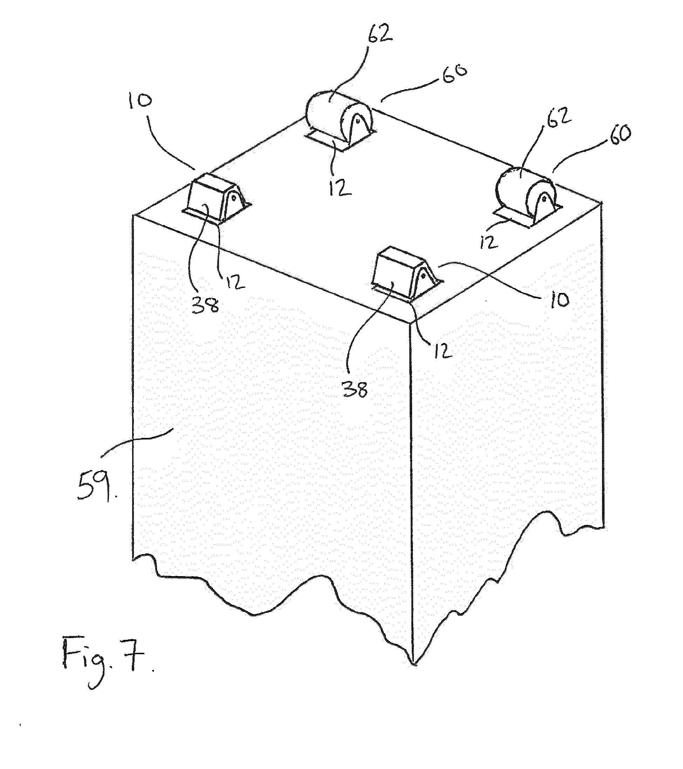

Fig. 7 illustrates part of packaging 59 for a packaged article. The packaging 59 has attached thereto: stabilisers 10 according to one or more embodiments of the present invention; and wheeling devices.

In the illustrated example, the wheeling devices comprise those as disclosed in GB 0906624.2.

The packaging 59 illustrated in Fig. 7 has attached to a bottom surface thereof two stabilisers 10 according to one or more embodiments of the present invention, and two wheeling devices 60.

The wheeling devices 60 each comprise a chassis which is the same as the chassis 12 as used for the stabilisers 10. The wheeling devices 60 each further comprises a roller 62. Each roller 62 is connected to a corresponding chassis 12 using a similar arrangement as that already described for retaining the anti-rolling means 38 in the chassis 12. The wheeling devices 60 may be attached to the packaging 59 of a packaged article by numerous means in a similar manner to the attachment of the stabilisers 10 to the packaging 59 (as described above). These means of attachment may include any of: adhering the second surface of the base plate of the chassis 12 to the packaging, sandwiching the base plate between two layers of packaging, screwing, bolting or riveting the base plate to the packaging by use of the circular hole in each corner of the base plate, attaching the base plate to the packaging by the use of staples, cable ties or strapping through the central rectangular holes located on the first and second sides of the base plate, or by use of a clamp connector inserted through the central rectangular aperture of the base plate.

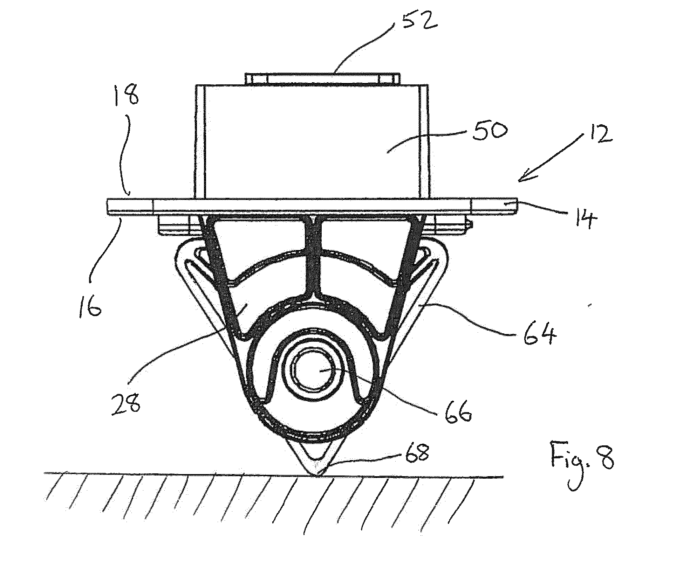

Fig. 8 illustrates a side view of an alternative assembled stabiliser according to one or more embodiments of the present invention. Features common to one or more other embodiments of the present invention, as described above, are denoted by like reference numerals and will not be described further.

The stabiliser 10 comprises an anti-rolling means 64 attached to a chassis 12 as illustrated in Fig. 1.

The anti-rolling means 64 comprises an elongate element having a triangular cross-section, e.g. a triangular prism.

The anti-rolling means 64 includes a connecting shaft 66 which forms part of the means by which the anti-rolling means 64 can engage with the chassis 12. The anti-rolling means 64 has a length of 70mm.

The connecting shaft 66 comprises two ends (only one end is shown in Fig. 8), each end extending from end surfaces of the anti-rolling means 64 in the same manner as the two ends extending from end surfaces of the anti-rolling means 38. Each end of the connecting shaft 66 is sized to engage the circular hole in one of the arms 28 of the chassis 12, so that the anti-rolling means 38 may be attached to the chassis 12 of the stabiliser 10 with each end of the connecting shaft 66 being supported by an arm 28. Insertion of the ends of the connecting shaft 66 into the circular holes is facilitated by the recesses in each of the arms 28. The length of the connecting shaft 66, including the ends, is 76mm, which is greater than the distance between the circular holes of the arms 28, and therefore the ends of the connecting shaft 66 will project through the arms 28, so that the anti-rolling means 64 is retained in the chassis 12. When the anti-rolling means 64 is engaged with the chassis 12 in this manner, one of the flat surfaces of the anti-rolling means 64 abuts the first surface 16 of the base plate 14. Such an arrangement prevents rotation of the anti-rolling means 64 relative to the chassis 12. Optionally, retaining clips or washers (not shown) may be inserted over the ends of the connecting shaft 66 once the anti-rolling means 64 is positioned in the chassis 12 to help retain the anti-rolling means 64 in this position.

In the illustrated embodiment, a ground-contacting portion of the anti-rolling means comprises an edge 68 of the triangular prism.

As discussed with respect to Fig. 1, the stabiliser 10 may be attached to the packaging of a package by numerous means, including any of: adhering the second surface 18 of the base plate 14 of the chassis 12 to the packaging, sandwiching the base plate 14 between two layers of packaging, screwing, bolting or riveting the base plate to the packaging by use of the circular hole 20 in each corner of the base plate 14, attaching the base plate 14 to the packaging by the use of staples, cable ties or strapping through the central rectangular holes located on the first and second sides of the base plate 14, or by use of a clamp connector inserted through the central rectangular aperture of the base plate 14.

The chassis 12 and anti-rolling means 64 of the stabiliser 10 are all made from Nylon 6, although other plastic materials (preferably easily recyclable materials) could be used. The chassis 12 and anti-rolling means 64 are optionally formed by injection moulding.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

The scope of the present disclosure includes any novel feature or combination of features disclosed therein either explicitly or implicitly or any generalisation thereof irrespective of whether or not it relates to the claimed invention or mitigate against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

## Claims

1. A stabiliser for a wheeled packaged article, the stabiliser being configured for direct attachment to the packaging of a packaged article by a clamp connector that engages an inner surface of the packaging, wherein the stabiliser comprises: anti-rolling means; a base plate, to which the anti-rolling means is coupled, and which base plate comprises means to enable the stabiliser to be attached to the packaging of a packaged article by a clamp connector; wherein the base plate comprises an aperture, so that when the device is attached to the packaging of a packaged article by a clamp connector, the clamp connector engages the surface of the base plate that is not in contact with the packaging.

2. A stabiliser according to Claim 1, wherein the anti-rolling means comprises an elongate element constrained to prevent rotation thereof.

3. A stabiliser according to Claim 2, wherein the elongate element comprises at least one substantially flat surface.

4. A stabiliser according to Claim 2 or 3, wherein the elongate element comprises a prism.

5. A stabiliser according to Claim 4, wherein the prism comprises at least three longitudinal faces.

6. A stabiliser according to Claim 5, wherein one of the at least three longitudinal faces comprises a ground-contacting surface of the anti-rolling means.

7. A stabiliser according to any one of the preceding claims, wherein the clamp connector is an integral part of the base plate.

8. A stabiliser according to any one of the preceding claims, further comprising a clamp connector.

9. A stabiliser according to any one of the preceding claims, wherein the base plate comprises two arms located on the face of the base plate which does not contact the packaging of a packaged article when the stabiliser is attached to said packaging, the arms being positioned on opposing edges of the base plate and extending perpendicularly therefrom, and comprising means to connect the anti-rolling means thereto.

10. A stabiliser according to any one of the preceding claims which is substantially composed of recyclable materials.

11. A stabiliser according to any one of the preceding claims which is substantially composed of a single material.

12. A stabiliser according to Claim 10 or Claim 11 which is substantially composed of Nylon®.

13. A wheelable package for an article comprising: at least one stabiliser, or optionally two, three or four stabilisers, according to any one of the preceding claims; at least one wheeling device; and wherein the at least one stabiliser, or optionally two, three or four stabilisers, is/are directly attached to the package.

14. A wheelable package for an article according to Claim 13, wherein the package comprises corrugated board or corrugated plastic; or optionally
wherein the package has a weight of between 5kg and 100kg; or optionally wherein the package has a weight of between 10kg and 50kg; or optionally
wherein the package contains one or more articles selected from mattresses, electrical items, bulky lightweight food products, or wherein the package is a point of sale display or a wardrobe case for hanging garments.

15. A method of improving the stability of a wheeled packaged article, comprising: directly attaching to the packaging of the article one or more stabilisers according to any one of Claims 1 to 12.
